# EUROPEAN PATENT APPLICATION

(11) **EP 3 822 002 A1**
(43) Date of publication of application: **19.05.2021**
(21) Application number: 20206796.3
(22) Date of filing: 10.11.2020
(51) Int. Cl.: B22F 3/04, B22F 10/18, C04B 35/622, B33Y 10/00, B33Y 40/20, B33Y 70/10

(54) **COLD ISOSTATIC PRESSING OF FUSED FILAMENT FABRICATED COMPONENTS**

(30) Priority: 14.11.2019 US 201962935426 P
(71) Applicant: Rolls-Royce Corporation, Indianapolis, Indiana 46225-1103 (US); Rolls-Royce North American Technologies, Inc., Indianapolis, IN 46241 (US)
(72) Inventor: SHUCK, Quinlan Yee, Indianapolis, Indiana 46220 (US); NELSON, Scott, Carmel, Indiana 46032 (US); XU, Raymond Ruiwen, Carmel, Indiana 46074 (US); RIBIC, Brandon David, Noblesville, Indiana 46060 (US); GOLD, Matthew, Carmel, Indiana 46033 (US)
(74) Representative: HGF

(57) **Abstract**

A method may include cold isostatic pressing a fused filament fabricated component comprising a plurality of roads and channels between at least some roads of the plurality of roads. The plurality of roads may include a sacrificial binder and a powder including a metal or alloy. The cold isostatic pressing reduces a presence of the channels between the at least some roads to form a compacted fused filament fabricated component. The method also may include removing substantially all the sacrificial binder from the compacted fused filament fabricated component and leave a powder component; and sintering the powder component to form a sintered component.

## Description

### TECHNICAL FIELD

The disclosure relates to additive manufacturing techniques, in particular, to additive manufacturing of alloy components.

### BACKGROUND

Additive manufacturing generates three-dimensional structures through addition of material layer-by-layer or volume-by-volume to form the structure, rather than removing material from an existing volume to generate the three-dimensional structure. Additive manufacturing may be advantageous in many situations, such as rapid prototyping, forming components with complex three-dimensional structures, or the like. In some examples, additive manufacturing may include fused deposition modeling or fused filament fabrication, in which heated material, such as polymer, is extruded from a nozzle and cools to be added to the structure.

### SUMMARY

In some examples, the disclosure describes a method that includes cold isostatic pressing a fused filament fabricated component comprising a plurality of roads and channels between at least some roads of the plurality of roads. The plurality of roads may include a sacrificial binder and a powder including a metal or alloy. The cold isostatic pressing reduces a presence of the channels between the at least some roads to form a compacted fused filament fabricated component. The method also may include removing substantially all the sacrificial binder from the compacted fused filament fabricated component and leave a powder component; and sintering the powder component to form a sintered component.

In some examples, the disclosure describes a method that includes fused filament fabricating a fused filament fabricated component by delivering a softened filament to selected locations at or adjacent to a build surface. The softened filament may include a sacrificial binder and a powder including a metal or alloy. The method also includes removing substantially all the sacrificial binder from the fused filament fabricated component to leave a powder component; cold isostatic pressing the powder component to form a compacted powder component; and sintering the compacted powder component to join particles of the metal or alloy powder and form a sintered component.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a flow diagram illustrating an example technique for forming a component using fused filament fabrication and cold isostatic pressing (CIP).
FIG. 2 is a conceptual block diagram illustrating an example system for forming an additively manufactured component by fused filament fabrication of a material including a powder including a metal or alloy and a binder.
FIG. 3 is a conceptual diagram illustrating an example fused filament fabricated component that includes porosity between adjacent roads.
FIG. 4 is a conceptual diagram illustrating an example cold isostatic pressing (CIP) system.
FIG. 5 is a conceptual diagram illustrating an example fused filament fabricated component after binder removal, in which porosity is present between particles and within particles.

### DETAILED DESCRIPTION

The disclosure generally describes techniques for forming components using fused filament fabrication (FFF) and cold isostatic pressing (CIP). Additive manufacturing of metal or alloy components may present unique challenges, for example, compared to additive manufacturing of polymeric components. For example, while techniques, such as powder bed fusion (including direct metal laser sintering, electron beam melting, selective laser sintering, or the like), which use a directed energy beam to fuse and sinter material may be useful in additive manufacturing, some alloys may respond to energy beams in a manner that may not be conducive to localized melting or localized sintering. Further, powder bed fusion may leave residual unfused or unsintered powder residue, for example, within channels or hollow internal passages of an additively manufactured component. Powder bed fusion of high temperature alloys may also result in components that may be prone to cracking due to localized melting and thermal gradients generated during the processing.

In some examples, a filament including a sacrificial binder and a powder including a metal or alloy dispersed in the sacricial binder may be deposited using FFF to form an additively manufactured component. The additively manufactured component may include a plurality of roads formed by the filament. After additively forming one or more layers of the component, or after forming the entire component, the binder may be selectively removed or sacrificed from the layers or the component, for example, using heating, chemical dissolution, or the like. Sacrificing the binder from the layers or the component may leave substantially only the powder in the layers or the component. The component may be further treated, for example, by sintering, to strengthen or densify the powder and form the additively manufactured component. By using the material including the sacrificial binder and the powder, removing the sacrificial binder, and sintering the powder, high-melt temperature alloys may be used, residual (free) powder may be reduced, and/or crack propensity may be reduced due to the absence of melting. Further, microstructure of the additively manufactured component may be more carefully controlled by controlling microstructure of the powder and avoiding melting of the powder during processing.

In accordance with techniques of this disclosure, cold isostatic pressing (CIP) may be used one or more times during the manufacturing process to reduce porosity that may otherwise be present in the component. For example, after FFF and before binder removal, the fused filament fabricated component may include porosity in the form of channels between adjacent roads. The fused filament fabricated component may be subjected to a CIP process to reduce or substantially eliminate the channels between adjacent roads before binder removal. In some examples, exposing the fused filament fabricated component to the CIP process may reduce or substantially eliminate porosity within roads (e.g., within the filament) should any porosity exist within the roads.

As another example, after binder removal, the remaining powder including the metal or alloy may be subjected to a CIP process prior to sintering to reduce or substantially elimintate porosity between particles of the powder or within the particles of the powder or between the layers. As another example, after sintering, the sintered component may be subjected to a CIP process to reduce or substantially elimintate porosity between and/or within particles of the powder. In this way, CIP may be used to reduce porosity in the final component (which may not easily be reduced or substantially removed by sintering), which may improve mechanical properties of the final component. In addition, by using CIP, manufacturing costs may be reduced compared to other compaction techniques, such as hot isostatic pressing (HIP), and the microstructural properties of the powder may be substantially unaffected by the compaction technique due to the low temperatures used during a CIP process. This may enable more complete control of mechanical properties of the final component.

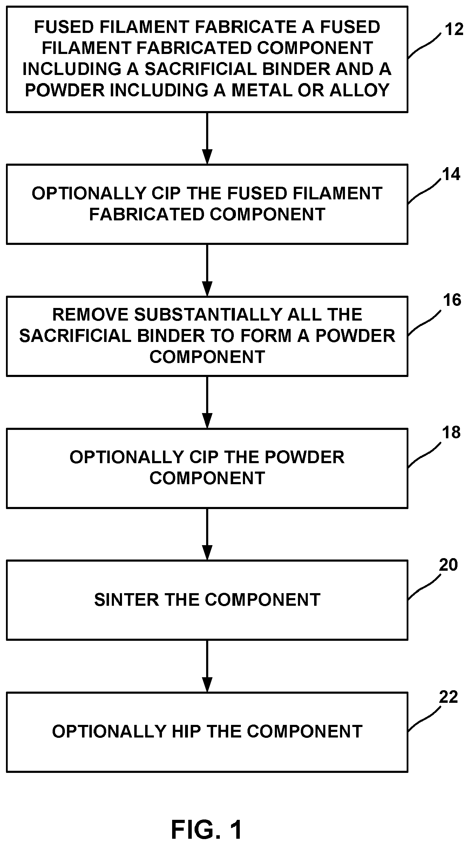

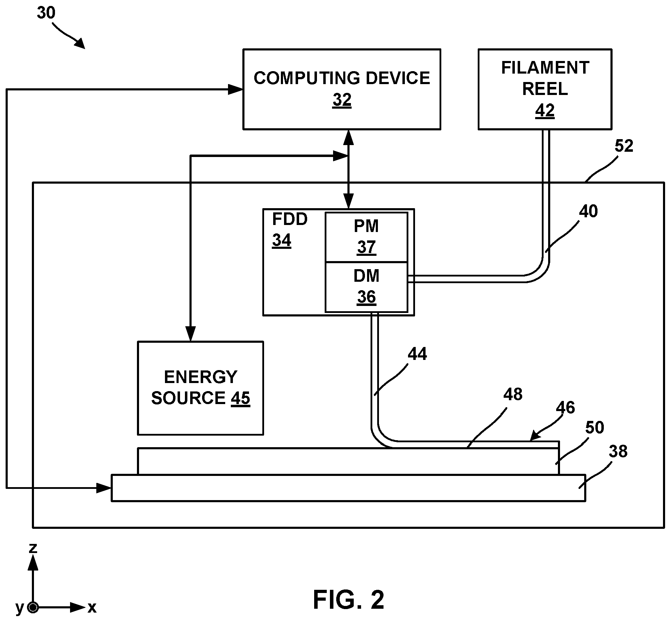

FIG. 1 is a flow diagram illustrating an example technique for forming a component using FFF and CIP. The steps of technique of FIG. 1 will be described with reference to FIGS. 2-5. Although the technique of FIG. 1 is described with respect to FIGS. 2-5, in other examples, the technique of FIG. 1 may be performed by other systems, such a system including fewer or more components than those described with reference to FIGS. 2-5. Similarly, the systems described with reference to FIGS. 2-5 may be used to perform other additive manufacturing techniques.

The technique of FIG. 1 optionally includes fused filament fabricating a fused filament fabricated component that includes a sacrificial binder and a powder including a metal or alloy (12). FIG. 2 is a conceptual block diagram illustrating an example FFF system 30 for performing FFF to form a fused filament fabricated component including a or alloy powder including a metal or alloy and a sacrificial binder by filament delivery. FFF system 30 may include a computing device 32, a filament delivery device 34, an enclosure 52, and stage 38.

Computing device 32 may include, for example, a desktop computer, a laptop computer, a workstation, a server, a mainframe, a cloud computing system, or the like. Computing device 32 is configured to control operation of FFF system 30, including, for example, filament delivery device 34, stage 38, or both. Computing device 32 may be communicatively coupled to filament delivery device 34, stage 38, or both using respective communication connections. In some examples, the communication connections may include network links, such as Ethernet, ATM, or other network connections. Such connections may be wireless and/or wired connections. In other examples, the communication connections may include other types of device connections, such as USB, IEEE 1394, or the like. In come examples, computing device 32 may include control circuitry, such as one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Filament delivery device (FDD) 34 may include, for example, a delivery mechanism (DM) 36 for delivering a filament 40 to or near stage 38, and an optional positioning mechanism (PM) 38. Fused filament fabricating the fused filament fabricated component (12) may include controlling, by computing device 32, filament delivery device 34 to advance filament 40 from a filament reel 42 and heat filament 40 to above a softening or melting point of a component of filament 40 (e.g., the sacrificial binder in filament 40) to form a softened filament 44. Filament delivery device 23 then extrudes softened filament 44 from delivery mechanism 36 to lay down softened filament 44 in a road 46 on a major surface 48 of a substrate 50 (or, in subsequent layers, on a previously deposited road). The softened filament 44 cools and, in this way, is joined to other roads.

Substrate 50 may include a build plate on stage 38, or any suitable substrate defining a build surface. For example, substrate 50 may include a metal or glass plate defining a substantially planar surface. In other examples, substrate 50 may include surface features or a shaped (e.g., curved or curvilinear) surface on which the additively manufactured component is manufactured. In some examples, FFF system 30 may not include a separate substrate 50, and filament delivery device 34 may deposit softened filament 44 on a build surface defined by stage 38, or on another component, or on layers of prior softened filament 44 or another material.

In some examples, filament delivery device 34 may, instead of receiving filament 40 from filament reel 42, include a chamber that holds a volume of a composition. The composition may be flowable, extrudable, or drawable from filament delivery device 34, for example, from delivery mechanism 36, in the form of softened filament 44 that may be deposited on or adjacent stage 38 or substrate 50. Softened filament 44 of the composition may be dried, cured, or otherwise solidified to ultimately form an additively manufactured component. In some examples, system 30 may include an energy source 45 configured to deliver energy to softened filament 44 to cure softened filament 44, for example, by photocuring or thermally curing the composition of softened filament 44.

Computing device 32 may be configured to control relative movement of filament delivery device 34 and/or stage 38 while fused filament fabricating the fused filament fabricated component (12) to control where filament delivery device 34 delivers softened filament 44. For example, stage 38 may be movable relative to filament delivery device 34, filament delivery device 34 may be movable relative to stage 38, or both. In some implementations, stage 38 may be translatable and/or rotatable along at least one axis to position substrate 50 relative to filament delivery device 34. For instance, stage 38 may be translatable along the z-axis shown in FIG. 2 relative to filament delivery device 34. Stage 38 may be configured to selectively position and restrain substrate 50 in place relative to stage 38 during manufacturing of the additively manufactured component.

Similarly, filament delivery device 34 may be translatable and/or rotatable along at least one axis to position filament delivery device 34 relative to stage 38. For example, filament delivery device 34 may be translatable in the x-y plane shown in FIG. 1, and/or may be rotatable in one or more rotational directions. Filament delivery device 34 may be translated using any suitable type of positioning mechanism 37, including, for example, linear motors, stepper motors, or the like.

Computing device 32 may be configured control movement and positioning of filament delivery device 34 relative to stage 38, and vice versa, to control the locations at which roads 46 are formed. Computing device 32 may be configured to control movement of filament delivery device 34, stage 38, or both, based on a computer aided manufacturing or computer aided design (CAM/CAD) file. For example, computing device 32 may be configured to control filament delivery device 34 (e.g., positioning mechanism 37) to trace a pattern or shape to form a layer including a plurality of roads on surface 48. Computing device 32 may be configured to control filament delivery device 34 or stage 38 to move substrate 50 away from filament delivery device 34, then control filament delivery device 34 to trace a second pattern or shape to form a second layer including a plurality of roads 46 on the first layer. Computing device 32 may be configured to control stage 38 and filament delivery device 34 in this manner to form a plurality of layers, each layer including a traced shape or design. Together, the plurality of layers defines a fused filament fabricated component.

FFF system 30 also includes an enclosure 52 that at least partially encloses filament delivery device 34 and stage 38, and optionally, energy source 45. In some examples, enclosure 52 substantially fully encloses delivery device 34 and stage 38, such that the environment within enclosure 52 may be controlled. In some examples, enclosure 52 includes or is coupled to a heat source configured to heat the interior environment of enclosure 52, a gas source and/or pump configured to control an atmospheric composition of the interior environment of enclosure 52, or the like. In this way, enclosure 52 may protect filament 40 and softened filament 44 during formation of the additively manufactured component, e.g., from unwanted chemical reactions that may change properties of the powder including the metal or alloy.

Filament reel 42 holds a filament 40 having a selected composition. In some examples, system 30 includes a single filament reel 42 holding a single filament 40 having a single composition. In other examples, system 30 may include multiple filament reels 42, each filament reel holding a corresponding filament 40 having a selected composition. Regardless of the number of filaments 40 and filament reels 42, each filament may include a powder including a metal or alloy and a sacrificial binder configurd to bind the metal or alloy powder in filament 40.

The powder may include any suitable metal or alloy for forming an additively manufactured component. In some examples, the powder include a high-performance metal or alloy for forming component used in mechanical systems, such as a steel (e.g., stainless steel), a nickel-based alloy, a cobalt-based alloy, a titanium-based alloy, or the like. In some examples, the metal or alloy powder may include a nickel-based, iron-based, or titanium-based alloy that includes one or more alloying additions such as one or more of Mn, Mg, Cr, Si, Co, W, Ta, Al, Ti, Hf, Re, Mo, Ni, Fe, B, Nb, V, C, and Y. In some examples, the powder may include a polycrystalline nickel-based superalloy or a polycrystalline cobalt-based superalloy, such as an alloy including NiCrAlY or CoNiCrAlY. For example, the metal or alloy may include an alloy that includes 9 to 10.0 wt. % W, 9 to 10.0 wt. % Co, 8 to 8.5 wt. % Cr, 5.4 to 5.7 wt. % Al, about 3.0 wt. % Ta, about 1.0 wt. % Ti, about 0.7 wt. % Mo, about 0.5 wt. % Fe, about 0.015 wt. % B, and balance Ni, available under the trade designation MAR-M-247, from MetalTek International, Waukesha, WI. In some examples, the metal or alloy may include an alloy that includes 22.5 to 24.35 wt. % Cr, 9 to 11 wt. % Ni, 6.5 to 7.5 wt. % W, less than about 0.55 to 0.65 wt. % of C, 3 to 4 wt. % Ta, and balance Co, available under the trade designation MAR-M-509, from MetalTek International. In some examples, the metal or alloy may include an alloy that includes 19 to 21 wt. % Cr, 9 to 11 wt. % Ni, 14 to 16 wt. % W, about 3 wt. % Fe, 1 to 2 wt. % Mn, and balance Co, available under the trade designation L605, from Rolled Alloys, Inc., Temperance, MI. In some examples, a metal or alloy may include a chemically modified version of MAR-M-247 that includes less than 0.3 wt. % C, between 0.05 and 4 wt. % Hf, less than 8 wt. % Re, less than 8 wt. % Ru, between 0.5 and 25 wt. % Co, between 0.0001 and 0.3 wt. % B, between 1 and 20 wt. % Al, between 0.5 and 30 wt. % Cr, less than 1 wt. % Mn, between 0.01 and 10 wt. % Mo, between 0.1 and 20. % Ta, and between 0.01 and 10 wt. % Ti. In some examples, the metal or alloy may include a nickel based alloy available under the trade designation IN-738 or Inconel 738, or a version of that alloy, IN-738 LC, available from All Metals & Forge Group, Fairfield, NJ, or a chemically modified version of IN-738 that includes less than 0.3 wt. % C, between 0.05 and 7 wt. % Nb, less than 8 wt. % Re, less than 8 wt. % Ru, between 0.5 and 25 wt. % Co, between 0.0001 and 0.3 wt. % B, between 1 and 20 wt. % Al, between 0.5 and 30 wt. % Cr, less than 1 wt. % Mn, between 0.01 and 10 wt. % Mo, between 0.1 and 20 wt. % Ta, between 0.01 and 10 wt. % Ti, and a balance Ni. In some examples, the metal or alloy may include may include an alloy that includes 5.5 to 6.5 wt. % Al, 13 to 15 wt. % Cr, less than 0.2 wt. % C, 2.5 to 5.5 wt. % Mo, Ti, Nb, Zr, Ta, B, and balance Ni, available under the trade designation IN-713 from MetalTek International, Waukesha, Wi. In some example, the metal or alloy may include a refractory metal or a refractory metal alloy, such as molybdenum or a molybdenum alloy (such as a titanium-zirconium-molybdenum or a molybdenum-tungsten alloy), tungsten or a tungsten alloy (such as a tungsten-rhenium alloy or an alloy of tungsten and nickel and iron or nickel and copper), niobium or a niobium alloy (such as aniobium-hafnium-titanium alloy), tantalum or a tantalum alloy, rhenium or a rhenium alloy, or combinations thereof.

In some examples, in addition to a metal or alloy, the powder may include a ceramic, such as an oxide. For example, the powder may include an oxide-dispersion strengthened (ODS) alloy. The ODS alloy may include at least one of a superalloy or a particle-dispersion strengthened alloy. ODS alloys are alloys strengthened through the inclusion of a fine dispersion of oxide particles. For example, an ODS alloy may include a high temperature metal matrix (e.g., any of the metals or alloys described above) that further include oxide nanoparticles, for example, yttria (Y₂O₃). Other example ODS alloys include nickel chromium ODS alloys, thoria-dispersion strengthened nickel and nickel chromium alloys, nickel aluminide and iron aluminide ODS alloys, iron chromium aluminide ODS alloys. Other strengthening particles may include alumina, hafnia, zirconia, beryllia, magnesia, titanium oxide, and carbides including silicon carbide, hafnium carbide, zirconium carbide, tungsten carbide, and titanium carbide.

Powders including ODS alloys may be formed by, for example, mixing a plurality of particles of metal(s) and oxide(s) forming the ODS alloy to form a mixture, optionally melting at least part of the mixture to form a melted mixture including oxide particles, and, if the mixture is melted, atomizing the melted mixture into the powdered form. Alternatively, the powdered form of the ODS alloy may be provided by hydrometallurgical processes, or any suitable technique for preparing an ODS alloy.

In some examples, ODS alloys may be characterized by the dispersion of fine oxide particles and by an elongated grain shape, which may enhance high temperature deformation behavior by inhibiting intergranular damage accumulation.

In some examples, the powder of filament 40 may include a ceramic powder, e.g., as an alternative to a metal or alloy powder. For example, the powder may include a ceramic, such as a nitride, carbide, or oxide, or carbon. Suitable ceramic materials include, for example, a silicon-containing ceramic, such as silica (SiO₂), silicon carbide (SiC), and/or silicon nitride (Si₃N₄); alumina (Al₂O₃); an aluminosilicate; a transition metal carbide (e.g., WC, Mo₂C, TiC); a silicide (e.g., MoSi₂, NbSi₂, TiSi₂); combinations thereof; or the like. In some examples, the ceramic functions as a reinforcement material in a final component formed from the filament. The primary material thus may include continuous or discontinuous reinforcement material. For example, the reinforcement material may include discontinuous whiskers, platelets, fibers, or particulates. Additionally, or alternatively, the reinforcement material may include a continuous monofilament or multifilament two-dimensional or three-dimensional weave, braid, fabric, or the like, within filament 40. In some examples, the reinforcement material may include carbon (C), silicon carbide (SiC), silicon nitride (Si₃N₄), an aluminosilicate, silica (SiO₂), a transition metal carbide or silicide (e.g. WC, Mo₂C, TiC, MoSi₂, NbSi₂, TiSi₂), or the like.

Filament 40 also includes a sacrificial binder. The sacrificial binder may include a polymeric material, such as a thermoplastic. Example thermoplastics include polyvinyl alcohol, polyolefins, polystyrene, acrylonitrile butadiene styrene, polylactic acid, thermoplastic polyurethanes, aliphatic polyamides, or the like, or combinations thereof. The powder including a metal or alloy may be dispersed in the sacrificial binder, for example substantially uniformly dispersed in the sacrificial binder.

In some examples, the sacrificial binder may be in the form of a curable polymer precursor. The curable polymer precursor may be curable (for example, thermally curable or photocurable) to form the sacrificial binder. For example, the curable polymer precursor may be cured as softened filaments 44 are extruded and/or after softened filaments 44 are laid down in roads 46 to form a material including the powder including a metal or alloy dispersed in the sacrificial binder, for example substantially uniformly dispersed in the sacrificial binder. The curable polymer precursor may include a precursor, for example, one or more monomers, oligomers, or non-crosslinked polymers suitable for forming the polymeric material of the sacrificial binder upon curing. Thus, in some examples, energy source 45 may direct energy at a curable polymer precursor, for example, in the material, to selectively cure the curable polymer precursor to form roads 46 including the material that includes the powder including the metal or alloy and the sacrificial binder. In other examples, the heat to which the composition is exposed to form softened filaments 44 may initiate the curing reaction, and no additional energy source is used.

Filament 40 includes a selected amount of sacrificial binder and powder including the metal or alloy so that the material in roads 46 may include more than about 80% by volume of the powder including the metal or alloy, which may result in a substantially rigid component with reduced porosity being formed in response to removal of the sacrificial binder. In some examples, filament 40 includes sacrificial binder in an amount configured to cause the material to shrink by less than about 20 volume percent relative to an initial volume of the material in response to removing the sacrificial binder. For example, filament 40 may include less than about 20% by volume of the sacrificial binder.

In some examples, filament 40 includes at least one shrink-resistant agent. For example, the at least one shrink-resistant agent may include a ceramic, instead of, or in addition to, the oxide in any ODS present in the material(s).

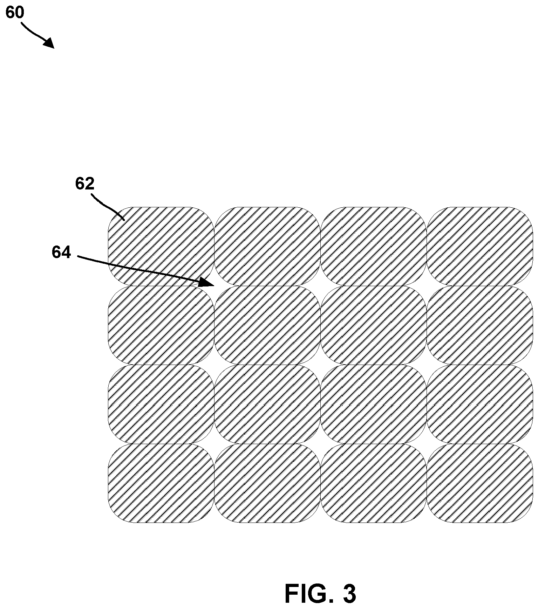

As shown in FIG. 3, a fused filament fabricated component 60 formed using FFF system 30 includes a plurality of roads 62. Adjacent roads 62 contact each other, but residual porosity in the form of channels 64 may remain within fused filament fabricated component 60, as softened flaments 44 may be only partially softened and/or may cool sufficiently quickly such that softened filaments 44 do not flow to fill all available space between roads 62. Further, channels 64 may be inconsistent in size and shape due to inconsistent softenening and/or cooling of the softened filament(s) 44 forming roads 62 during fused filament fabrication. The presence of channels 64 within fused filament fabricated component 60 may result in residual porosity remaining in a final component formed by removal of binder from roads 62 and sintering of the powder. The residual porosity may result in decreased and/or unpredictable mechanical properties in the final component compared to a final component that is substantially free of residual porosity.

To reduce or substantially eliminate porosity from a final product formed from fused filament fabricated component 60, the technique of FIG. 1 may include one or more steps of cold isostatic pressing (CIP) an intermediate component. In some examples, the intermediate component includes fused filament fabricated component 60. In other examples, the intermediate component includes a component in which the sacrificial binder has been remove and/or the powder including the metal or alloy has been sintered. In this way, the general techniques described herein include subjecting a component being manufactured to at least one CIP process.

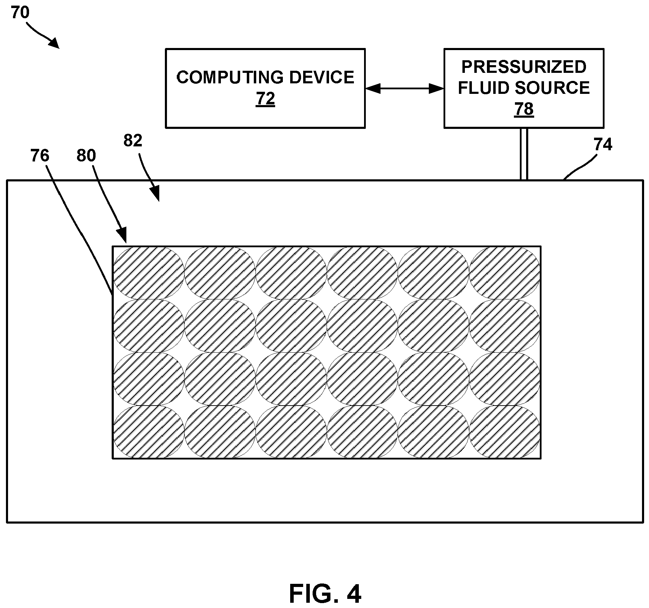

The technique of FIG. 1 optionally includes subjecting fused filament fabricated component 60 to a CIP process (14). When performed at this point, the CIP process (14) may reduce or substantially eliminate channels 64 between adjacent roads 62, which may reduce or substantially eliminate porosity in a final component formed from fused filament fabricated component 60. FIG. 4 is a conceptual diagram of an example system 70 for subjecting a fused filament fabricated component (such as fused filament fabricated component 60) to a CIP process. FIG. 3 is only one example, and other types of CIP systems may be used to subject a fused filament fabricated component 80 to a CIP process. System 70 includes a computing device 72, a pressure chamber 74, and a soft mold 76 within the pressure chamber 74. System 70 also includes a pressurized fluid source 78. A fused filament fabricated component 80 is disposed in the soft mold 76, and a pressurized fluid 82 surrounds the soft mold 76 within the pressure chamber 74. Fused filament fabricated component 80 may be an example of fused filament fabricated component 60 shown in FIG. 3, and may be formed using system 30 of FIG. 2.

Computing device 72 may include, for example, a desktop computer, a laptop computer, a workstation, a server, a mainframe, a cloud computing system, or the like. Computing device 72 is configured to control operation of system 70, including, for example, pressurized fluid source 78. Computing device 72 may be communicatively coupled to pressurized fluid source 78 using any suitable communication connection. In some examples, the communication connection may include a network link, such as Ethernet, ATM, or another network connection. Such connection may be wireless and/or wired. In other examples, the communication connection may include other types of device connection, such as USB, IEEE 1394, or the like. In come examples, computing device 72 may include control circuitry, such as one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Pressurized fluid source 78 may include any source of fluid that can be pressurized to exert pressure on soft mold 76 and, ultimately, fused filament fabricated component 80. For example, pressurized fluid source 78 may include a container holding a fluid and a pump for increasing the pressure of the fluid. The fluid may be compressible (e.g., a gas) or incompressible (e.g., a liquid). Pressurized fluid source 78 may provide pressurized fluid 82 to the interior of pressure chamber 74, e.g., via piping or conduit. In some examples, pressurized fluid 82 may be selected to be substantially chemically inert (e.g., not reactive) with the materials from which fused filament fabricated component 80 is formed in case soft mold 76 leaks.

In some examples, rather than including a pressurized fluid source 78 that is configured to supply pressurized fluid 82 to the interior of pressure chamber 74, pressure chamber 74 may be filled with fluid under atmospheric or nearly atmospheric pressure, and enclosure 74 may include a mechanism for applying pressure to the fluid to pressurize the fluid. For example, one wall of pressure chamber 74 may be movable under influence of a motor, a hydraulic system, and pneumatic system, or the like to apply pressure to the fluid. As another example, a piston or plunger may be extendable into the interior of pressure chamber 74 to exert pressure on pressurized fluid 82.

Soft mold 76 may include any material that can be formed into a substantially sealed pouch around fused filament fabricated component 80 to form a substantially fluid-tight atmosphere around fused filament fabricated component 80. For example, soft mold 76 may include a polymer or mixture of polymers, a metal, an alloy, or the like, formed into a sheet, pouch, bag, or the like, and sealed to enclose fused filament fabricated component 80. The material of soft mold 76 may be selected based on a temperature at which the CIP process is formed. For example, for a CIP process that is performed at less than about 300 °F (about 149°C), soft mold 76 may be formed from a polymer or mixture of polymers having a suitable melting, softening, or degradation temperature. As another example, for a CIP process that is performed at less than about 500 °F (about 260°C), soft mold 76 may be formed from a relatively flexible metal film that has a melting temperature above the temperature at which the CIP process is formed. Regardless of the material from which it is formed, soft mold 76 may have wall or film thicknesses that are sufficient to resist rupture under the pressures applied by pressurized fluid 82.

In some examples, soft mold 76 may include a film that is applied to an outer surface of fused filament fabricated component 80, e.g., by dip coating, spraying, brushing, rolling, or the like.

In some examples, soft mold 76 may be vacuum sealed, e.g., gas within the interior of soft mold 76 may be substantially fully evacuated using a vacuum pump before sealing soft mold 76 around fused filament fabricated component 80. This may facilitate compaction of fused filament fabricated component 80 under the pressure exerted by pressurized fluid 82.

In any case, computing device 72 may control pressurized fluid source 78 or another mechanism to increase pressure of pressurized fluid 82, which pressure is transferred through soft mold 76 to fused filament fabricated component 80. Since the pressure is exerted via pressurized fluid 82, the pressure may be exerted inwardly against all surfaces of fused filament fabricated component 80. The time and pressure magnitude may be selected to compress fused filament fabricated component 80 and reduce the volume of channels 64 (FIG. 3) or remove substantially all channels 64. For an example, up to 10% reduction in void volume percentage may be achieved with the CIP prior to binder removal. The CIP time is typically in between about 0.5 hour and about 8 hours, the CIP temperature may range from about room temperature up to about 600°F (about 315.6°C), and the CIP pressure may be up to about 3,000 psi (about 20.68 MPa).

The technique of FIG. 1 also includes, either after forming the fused filament fabricated component (12) or subjecting the fused filament fabricated component to a CIP process (14), removing substantially all of the sacrificial binder from fused filament fabricated component 60, 80 to form a powder component (16). Removing substantially all of the sacrificial binder (16) may include delivering thermal or any suitable energy, for example, using energy source 45, to roads 46, 62 in an amount sufficient to cause the sacrificial binder to be substantially oxidized, incinerated, carbonized, charred, decomposed, or otherwise removed from roads 46, 62, while leaving the powder including the metal or alloy substantially intact. In other examples, the fused filament fabricated component 60, 80 may be placed in a furnace to heat the fused filament fabricated component 60, 80 and cause removal of the sacrificial binder from the component 60, 80 (16).

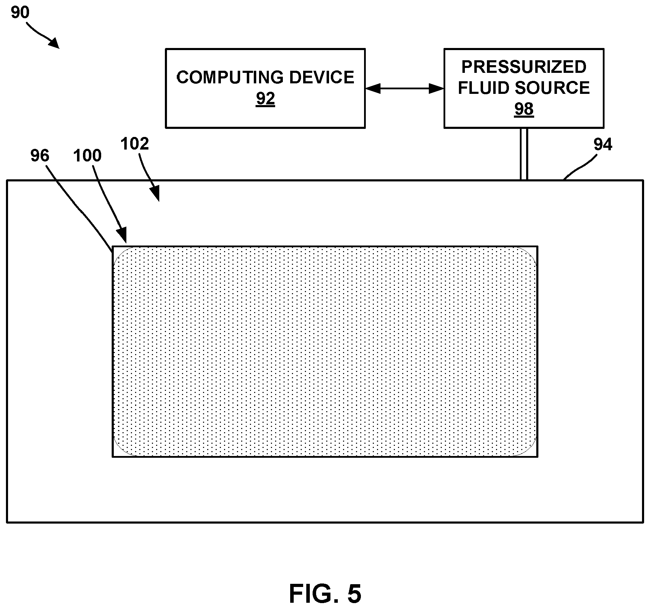

The technique of FIG. 1 also optionally includes, after removing the sacrificial binder (16), subjecting the powder component to a CIP process (18). FIG. 5 is a conceptual diagram of an example system 90 for subjecting a powder component to a CIP process. FIG. 5 is only one example, and other types of CIP systems may be used to subject a powder component to a CIP process. System 90 includes a computing device 92, a pressure chamber 94, and a soft mold 96 within the pressure chamber 94. System 90 also includes a pressurized fluid source 98. A powder component 100 is disposed in the soft mold 96, and a pressurized fluid 102 surrounds the soft mold 96 within the pressure chamber 94.

Each of the components of system 90 of FIG. 5 may be similar to or substantially the same as a corresponding component of system 70 of FIG. 4. In some examples, the components may include different properties or characteristics due to different parameters for CIP process (18) compared to CIP process (14). For example, subjecting the powder component 100 to a CIP process (18) may be performed at a higher temperature than the CIP process (14) during which the fused filament fabricated component 60, 80 is compacted. For example, the CIP process (18) during which the powder component 100 is compacted may be performed at a temperature between about 200 °F (about 93°C) and about 500°F (about 260°C), or between about 300 °F (about 149°C) and about 500 °F (about 260°C), or between about 400 °F (about 204°C) and about 500 °F (about 260°C). As such, soft mold 96 may be formed from a material with a sufficiently high melting temperature, such as a metal or alloy film. In other examples, system 90 may omit soft mold 96, which may allow fluid to infiltrate spaces between the particles. The CIP process (18) during which the powder component 100 is compacted may result in up to 5% reduction in void volume percentage. The CIP time is typically in between about 1 hour and about 4 hours, with a CIP pressure of up to about 3,000 psi (about 20.68 MPa).

The CIP process (18) performed on the metal or alloy component 96 may reduce or substantially eliminate porosity between and/or within particles of the metal or alloy particle. In this way, the CIP process (18) may reduce or substantially eliminate porosity in a final component formed from powder component 100. In examples in which the soft mold 96 is omitted, the CIP process (18) may reduce or substantially eliminate porosity within the particles, but may leave porosity between the particles substantially unchanged.

The technique of FIG. 1 also includes, after removing the sacrificial binder (16) and/or subjecting the metal or alloy component to the CIP process (18), sintering the metal or alloy component (20). The sintering may include a thermal treatment, for example, one or more predetermined cycles of exposure to predetermined temperatures for predetermined times. In some examples, energy source 45 may deliver energy to cause sintering. In other examples, the metal or alloy component may be placed in a furnace to heat the metal or alloy component and cause sintering. In some examples, the sintering (20) may promote the bonding of particles of powder including the metal or alloy to each other to strengthen the component including substantially only the powder after the binder is sacrificed. Sintering may not melt the particles of powder including the metal or alloy, thus leaving the microstructure of the particles substantially intact. This may facilitate forming components with selected mictrostructures compared to techniques that include melting the powder including the metal or alloy. The sintering (20) may also densify an interior or a surface region of the component, for example, by promoting powder compaction and reducing porosity. In some examples, the steps of removing the sacrificial binder (16) and sintering the component (20) may be combined in a single heating step or series of heating steps, e.g., within a furnace, without an intervening CIP step.

The technique of FIG. 1 may optionally include subjecting the sintered component to a hot isostatic pressing (HIP) step (22). For example, the sintered component may be placed in a pressure containment vessel and exposed to a fluid under high pressures at a high temperature of about 2050°F (about 1121°C) and 14,500 psi (about 100 MPa). The fluid may be selected to be inert to the sintered component. For example, a noble gas such as argon may be used. The temperature may be selected based on the metal or alloy in the sintered component.

In this way, by including one or more CIP step and an optional HIP step, mechanical properties of a final component may be improved and more predictable due to reduce porosity in the final component. Further, by using CIP on the fused filament fabricated component and/or the powder component, costs may be reduced compared to using HIP at these steps, and may allow reduced sintering times and/or reduced HIP times and/or temperatures.

The techniques described in this disclosure may be implemented, at least in part, in hardware, software, firmware, or any combination thereof. For example, various aspects of the described techniques may be implemented within one or more processors, including one or more microprocessors, digital signal processors (DSPs), application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit including hardware may also perform one or more of the techniques of this disclosure.

Such hardware, software, and firmware may be implemented within the same device or within separate devices to support the various techniques described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware, firmware, or software components. Rather, functionality associated with one or more modules or units may be performed by separate hardware, firmware, or software components, or integrated within common or separate hardware, firmware, or software components.

The techniques described in this disclosure may also be embodied or encoded in an article of manufacture including a computer-readable storage medium encoded with instructions. Instructions embedded or encoded in an article of manufacture including a computer-readable storage medium encoded, may cause one or more programmable processors, or other processors, to implement one or more of the techniques described herein, such as when instructions included or encoded in the computer-readable storage medium are executed by the one or more processors. Computer readable storage media may include random access memory (RAM), read only memory (ROM), programmable read only memory (PROM), erasable programmable read only memory (EPROM), electronically erasable programmable read only memory (EEPROM), flash memory, a hard disk, a compact disc ROM (CD-ROM), a floppy disk, a cassette, magnetic media, optical media, or other computer readable media. In some examples, an article of manufacture may include one or more computer-readable storage media.

In some examples, a computer-readable storage medium may include a non-transitory medium. The term "non-transitory" may indicate that the storage medium is not embodied in a carrier wave or a propagated signal. In certain examples, a non-transitory storage medium may store data that can, over time, change (e.g., in RAM or cache).

Various examples have been described. These and other examples are within the scope of the following claims.

## Claims

1. A method comprising:
cold isostatic pressing a fused filament fabricated component comprising a plurality of roads and channels between at least some roads of the plurality of roads, wherein the plurality of roads comprise a sacrificial binder and a powder including at least one of a metal, an alloy, or a ceramic, and wherein the cold isostatic pressing reduces a presence of the channels between the at least some roads to form a compacted fused filament fabricated component;
removing substantially all the sacrificial binder from the compacted fused filament fabricated component and leave a powder component; and
sintering the powder component to form a sintered component.

2. The method of claim 1, wherein cold isostatic pressing the fused filament fabricated component comprises wet bag cold isostatic pressing the fused filament fabricated component.

3. The method of claim 1, wherein cold isostatic pressing the fused filament fabricated component comprises dry bag cold isostatic pressing the fused filament fabricated component.

4. The method of any one of claims 1 to 3, further comprising cold isostatic pressing the powder component after removing substantially all of the sacrificial binder and prior to sintering the powder component.

5. The method of claim 4, wherein cold isostatic pressing the powder component comprises at least one of wet bag cold isostatic pressing or dry bag cold isostatic pressing the powder component.

6. The method of claim 4, wherein cold isostatic pressing the powder component comprises cold isostatic pressing without placing the powder component in a bag.

7. The method of any one of claims 1 to 3, wherein removing substantially all the sacrificial binder and sintering the powder component is performed in a single heating operation.

8. The method of any one of claims 1 to 7, further comprising fused filament fabricating the fused filament fabricated component by delivering a softened filament to selected locations at or adjacent to a build surface, wherein the softened filament comprises the sacrificial binder and the powder, and wherein the softened filament defines the plurality of roads.

9. The method of any one of claims 1 to 8, wherein the fused filament fabricated component defines a first void percentage, wherein the compacted fused filament fabricated component defines a second void percentage, and wherein the second void percentage is less than the first void percentage.

10. The method of any one of claims 1 to 9, further comprising subjecting the sintered component to a hot isostatic pressing (HIP) step.

11. A method comprising:
fused filament fabricating a fused filament fabricated component by delivering a softened filament to selected locations at or adjacent to a build surface, wherein the softened filament comprises a sacrificial binder and a powder including at least one of a metal, an alloy, or a ceramic;
removing substantially all the sacrificial binder from the fused filament fabricated component to leave a powder component;
cold isostatic pressing the powder component to form a compacted powder component; and
sintering the compacted powder component to join particles of the metal or alloy powder and form a sintered component.

12. The method of claim 11, wherein cold isostatic pressing the powder component comprises at least one of wet bag cold isostatic pressing or dry bag cold isostatic pressing the powder component.

13. The method of claim 11, wherein cold isostatic pressing the powder component comprises cold isostatic pressing without placing the metal or alloy powder component in a bag.

14. The method of any one of claims 11 to 13, further comprising subjecting the sintered component to a hot isostatic pressing (HIP) step.

15. The method of any one of claims 11 to 14, wherein the powder component defines a first void percentage, wherein the compacted powder component defines a second void percentage, and wherein the second void percentage is less than the first void percentage.
